# EUROPEAN PATENT APPLICATION

(11) **EP 4 555 842 A1**
(43) Date of publication of application: **21.05.2025**
(21) Application number: 24210534.4
(22) Date of filing: 04.11.2024
(51) Int. Cl.: A01B 23/02, A01B 35/22, A01B 35/26

(54) **A SUBSOILER AND A LEG ASSEMBLY FOR A SUBSOILER**

(30) Priority: 09.11.2023 GB 202317162
(71) Applicant: Erth Engineering Limited, Seaforde Down BT30 8PJ (GB)
(72) Inventor: MCCOUBREY, David, Seaforde, BT30 8PJ (GB)
(74) Representative: FRKelly

(57) **Abstract**

A leg assembly 10 for a subsoiler. The leg assembly comprises a leg 11 and a ground tilling portion 12. The leg 11 is adjustably mounted to a mounting section 13 of the subsoiler via an adjustment arrangement 14. The leg 11 is adjustable relative to the mounting section 13 of the subsoiler such that the angle of attack of the ground tilling portion 12 relative to the ground is adjustable.

## Description

### Field of the invention

This invention relates to a subsoiler and a leg assembly therefor, and in particular to an adjustable subsoiler and leg assembly therefor.

### Background of the invention

Subsoilers are used in agriculture for deep tillage, loosening and breaking up soil at depths not worked by other equipment such as ploughs. The angle of the tilling portion of a subsoiler relative to the ground is generally manufactured to provide a balance between ground penetration and lift (or heave). Poor penetration results in slow ground entry and possible instability along the field. Penetration will vary based upon soil type, moisture content, and condition of the ground engaging point of the tilling portion. In addition, a suitable angle of attack, or raking angle, is required. Increased rake angle can cause mixing of soil and an overly disturbed surface, which is undesirable to many subsoil users. In general, subsoiler manufactures will experiment to settle on a compromised angle which attempts to balance penetration and lift. However, when used in the field, these idealised chosen angles often result in issues given that they do not optimise this balance of penetration and lift across all ground types, moisture levels, and/or levels of tilling portion wear. For example, a user operating in hard ground may only be able to partially wear a tilling portion before it requires replacement as the angle of attack is such that penetration is not sufficient beyond a certain level of wear.

Given the depths a subsoiler is required to work, there can be significant pressure and friction experienced by the tilling portion thereof, and significant strain on the tilling leg and overall apparatus. Again, this is exacerbated when the ground is hard and/or dry and can result on significant wear on the tilling portion or associated components, which reduces their overall effectiveness. These components can therefore require frequent replacement in hard ground/dry conditions in order that they adequately preform the subsoiling process. In addition, where the tilling portion or ground piercing portion thereof is worn, the only reasonable option to ensure effective tilling is to replace the tilling portion or ground piercing portion. Moreover, subsoiler operators may often utilise a subsoiler in varied ground conditions but generally use the same subsoiler regardless of conditions, which can lead to sub-optimal subsoiling efficiency.

It is desirable to provide a subsoiler which is more efficient when operating in harsher ground conditions, but yet performs adequately in softer ground conditions, and which optimises tilling effectiveness when utilising worn or partially worn tilling portions.

### Summary of the Invention

According to the invention there is provided a leg assembly for a subsoiler comprising: a leg comprising a ground tilling portion; the leg being adjustably mountable to a mounting section of the subsoiler via an adjustment arrangement; wherein the leg is adjustable relative to the mounting section of the subsoiler such that the angle of attack of the ground tilling portion relative to the ground is adjustable.

Advantageously, the angle of the ground tilling portion may be adjusted to a plurality of angles suited to a plurality of ground conditions such that, for example, when the ground is firmer, the ground tilling portion may be adjusted to till the ground at an optimal angle which results in less wear on the leg assembly and ground tilling portion, and more efficient tilling.

Further advantageously, where a worn or partially worn tilling portion is utilised, the ground tilling portion may be adjusted to till the ground at an optimal angle which maximises the efficiency of the worn or partially worn tilling portion.

Further advantageously, the angle of attack may be selectably reduced to reduce heave and surface break-up when tilling or selectably increased to provide better penetration and permit worn tilling portions to keep working beyond their useful lifespan as would be experienced on a non-adjustable leg.

Further advantageously, running costs are reduced due to the increased efficiency of tilling and/or the reduced need to replace worn tilling portions.

Ideally, the adjustment arrangement comprises a receiving feature formed in the leg.

Preferably, the adjustment arrangement comprises a corresponding insert formed for insertion into the receiving feature.

Ideally, the receiving feature comprises a recess or throughout formed in the leg.

Preferably, the recess or throughout is shaped and dimensioned to receive the insert.

Ideally, the receiving feature and insert are correspondingly shaped generally circular features and sized such that the generally circular insert is receivable within the generally circular receiving feature.

Preferably, the leg is formed from a plate material having first and second opposing surfaces separated by a plate thickness, the opposing surfaces each comprising an outline shape defining the shape of the leg.

Ideally, the receiving feature is a throughcut formed in the plate like material of the leg within the bounds of the outline shape and which extends from the first opposing surface to the second opposing surface forming a complete throughout.

Preferably, the insert is formed from a plate like material having first and second opposing surfaces separated by an insert plate thickness.

Ideally, the insert plate thickness is substantially equal to the plate thickness of the leg and the insert is shaped correspondingly to the throughout of the leg such that the insert is receivable into the throughout.

Preferably, when the insert is inserted into the receiving feature, the first and second opposing surfaces of the insert are generally coplanar with the first and second opposing surfaces of the leg.

Ideally, the leg and insert are formed from sheet metal, and preferably from sheet steel.

Preferably, the thickness of the sheet material from which the leg and insert are formed is between 15mm and 40mm, and most preferably the thickness being 25mm.

Ideally, the insert comprises an insert throughbore.

Preferably the insert throughbore is formed for receiving a mechanical fastener.

Ideally, the mounting section comprises a first attachment throughbore.

Preferably, the first attachment throughbore is alignable with the insert throughbore of the insert.

Ideally, a first mechanical fastener is engagable through the aligned first attachment throughbore and the insert throughbore to releasably mount the insert to the mounting section.

Preferably, the insert throughbore is an offset throughbore which is offset centrally relative to the overall insert shape.

Preferably, the center of the insert throughbore is offset relative to the center of the insert.

Ideally, the center of the insert throughbore is offset horizontally and/or vertically relative to the center of the insert.

Ideally, the center of the insert throughbore is offset both horizontally and vertically relative to the center of the insert.

Ideally, the center of the insert throughbore is horizontally offset from the center of the insert by between 5mm and 20mm and vertically offset from the center of the insert by between 1 mm and 8mm.

Most ideally, the center of the insert throughbore is horizontally offset from the center of the insert by approximately 12.5mm and vertically offset from the center of the insert by approximately 4mm.

Ideally, the receiving feature and the insert comprise a mutually engagable locking arrangement therebetween.

Preferably, the mutually engagable locking arrangement is configured to selectably lock the insert at two or more pre-defined positions relative to the receiving feature.

Ideally, the locking arrangement comprises a male locking feature on one of the insert or the receiving portion and a plurality of female locking features sized and dimensioned for receiving the male locking feature formed on the respective other of the insert or the receiving portion.

Preferably, the male locking feature is a locking protrusion and the female locking feature is a locking recess.

Ideally, the locking arrangement comprises a locking protrusion locatable on one of the insert or the receiving portion and a plurality of locking recesses sized and dimensioned for receiving the locking protrusion formed on the respective other of the insert or the receiving portion.

Preferably, the locking protrusion is formed on the insert and protrudes outwardly from an outer edge thereof.

Ideally, the plurality of locking recesses are formed on the receiving feature and form outwardly protruding recesses formed in the material of the leg which surrounds the receiving feature.

Preferably the locking protrusion is a wedge shaped protrusion.

Ideally the locking recesses are correspondingly shaped wedge shaped recesses which are each sized to receive the wedge shaped locking protrusion.

Ideally, the insert is movable relative to the receiving feature such that the insert is selectably insertable into said receiving feature such that its locking protrusion may be selectably engaged in any chosen locking recess of the receiving feature.

Preferably, a plurality of possible locked positions are selectable whereat the insert and the leg are positionally locked relative to each other, the particular locked position being dependent on which locking recess the locking protrusion is selectably engaged in.

Ideally, the insert and leg are optionally fixed in a chosen locked position by tightening of the first mechanical fastener.

Preferably, the receiving feature is a generally circular receiving feature having the locking recesses formed at a circumference thereof, the locking recesses forming recesses which extend beyond the circumference of the generally circular receiving feature into surrounding material of the leg.

Ideally, wherein the insert is a generally circular insert sized such that it may be received in the generally circular receiving feature.

Preferably, the locking protrusion is located at a circumference of the insert and extends beyond said circumference to form a projection therefrom outside of the main generally circular body of the insert.

Ideally, the insert is rotatably alignable relative to the receiving feature prior to insertion such that the locking protrusion is selectably alignable with a chosen locking recess, upon which the insert is inserted into the receiving feature, engaging the locking protrusion in said chosen locking recess.

Preferably, when the insert is viewed in two dimensional plan view, the center of the insert throughbore is located between 3mm and 5mm in a first dimension from the center of the opening of the locking protrusion on the outer edge of the insert and between 30mm and 37mm in a second dimension from the center of the opening of the locking protrusion on the outer edge of the insert.

Most preferably, when the insert is viewed in two dimensional plan view, the center of the insert throughbore is located approximately 4mm in a first dimension from the center of the opening of the locking protrusion on the outer edge of the insert and approximately 33.5mm in a second dimension from the center of the opening of the locking protrusion on the outer edge of the insert.

Ideally, the receiving feature comprises two locking recesses.

Preferably, when the leg is viewed in two dimensional plan view, the center of the openings of the said two locking recesses are locatable between 6mm and 9mm in a first dimension from each other and between 40mm and 50mm in a second dimension from each other.

Most ideally, when the leg is viewed in two dimensional plan view, the center of the openings of the said two locking recesses are locatable approximately 7.2mm in a first dimension from each other and approximately 45.6mm in a second dimension from each other.

Ideally, the leg and mounting section are releasably mountable to each other at a second mounting arrangement.

Preferably, the second mounting arrangement comprises a second attachment throughbore formed in the mounting section and a corresponding leg throughbore formed in the leg.

Ideally, the leg throughbore is alignable with the second attachment throughbore and a second mechanical fastener is engagable through said aligned throughbores to releasably mount the leg to the mounting section.

Preferably, the leg throughbore and/or second attachment throughbore is an elongated throughbore.

Most preferably, the leg throughbore being an elongated throughbore.

Advantageously, the elongated throughbore permits longitudinal movement of the second mechanical fastener when said second mechanical fastener is loosened, such that as the leg is adjusted via the adjustment arrangement, the second mechanical fastener may travel as required.

Ideally, when the leg is viewed in a two dimensional plan view, the center of the receiving feature is located between 135mm and 142mm in a first dimension from the center of the leg throughbore and between 120mm and 130mm in a second dimension from center of the leg throughbore.

Most ideally, when the leg is viewed in a two dimensional plan view, the center of the receiving feature is located approximately 139mm in a first dimension from the center of the leg throughbore and approximately 126mm in a second dimension from center of the leg throughbore.

Preferably, when the leg is viewed in a two dimensional plan view, the center of the opening of a first locking recess into the material surrounding the receiving feature is located between 100mm and 120mm in a first dimension from the center of the leg throughbore, and located between 100mm and 120mm in a second dimension from the center of the leg throughbore.

Most preferably, when the leg is viewed in a two dimensional plan view, the center of the opening of a first locking recess into the material surrounding the receiving feature is located approximately 115.4mm in a first dimension from the center of the leg throughbore, and located approximately 106.5mm in a second dimension from the center of the leg throughbore.

Preferably, when the leg is viewed in a two dimensional plan view, the center of the opening of a second locking recess into the material surrounding the receiving feature is located between 115mm and 130mm in a first dimension from the center of the leg throughbore, and located between 145mm and 160mm in a second dimension from the center of the leg throughbore.

Most preferably, when the leg is viewed in a two dimensional plan view, the center of the opening of a second locking recess into the material surrounding the receiving feature is located approximately 122.6mm in a first dimension from the center of the leg throughbore, and located approximately 152.2mm in a second dimension from the center of the leg throughbore.

According to a second aspect of the invention there is provided a subsoiler comprising a leg assembly, the leg assembly comprising a leg comprising a ground tilling portion; the leg being adjustably mountable to a mounting section of the subsoiler via an adjustment arrangement; wherein the leg is adjustable relative to the mounting section of the subsoiler such that the angle of attack of the ground tilling portion relative to the ground is adjustable.

According to a third aspect of the invention there is provided a method of manufacturing a leg assembly for a subsoiler comprising the steps of: forming a leg comprising a ground tilling portion; forming an adjustment arrangement; adjustably mounting the leg to a mounting section of the subsoiler via the adjustment arrangement; wherein the leg is adjustable relative to the mounting section of the subsoiler such that the angle of attack of the ground tilling portion relative to the ground is adjustable.

### Brief description of the drawings

An embodiment of the invention is now described by way of example and with reference to the accompanying drawings in which:
Figure 1 is an isometric view of an embodiment of a leg assembly for a subsoiler;

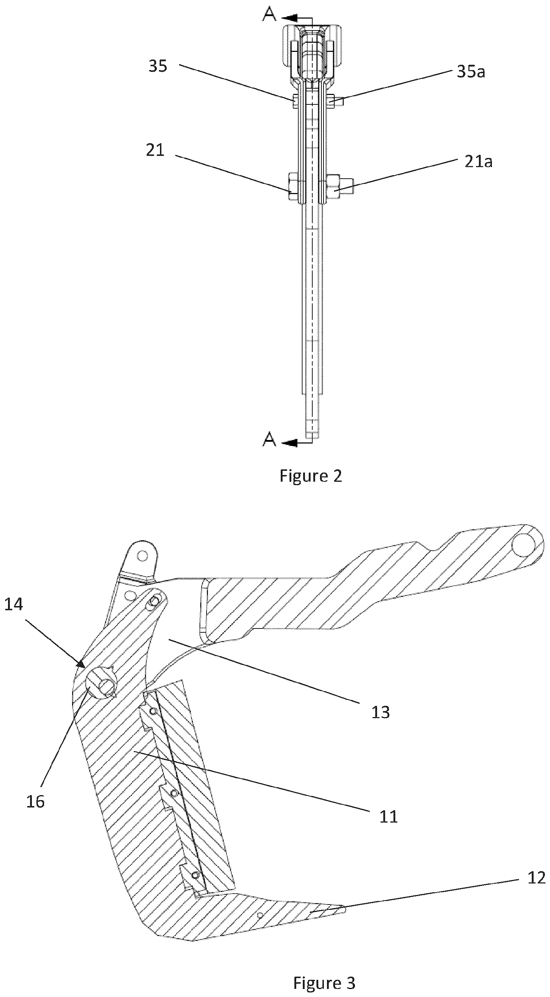

Figure 2 is a rear view of the leg assembly of Figure 1;
Figure 3 is a sectional view of section A-A of Figure 2;
Figure 4 is a side view of an embodiment of a leg assembly for a subsoiler with an adjustable leg thereof in a first position;
Figure 5 is a side view of the leg assembly of Figure 4 with an adjustable leg thereof in a second position;
Figure 6 is a side view of an adjustable leg portion of the leg assembly of Figure 4;
Figure 7 is a detail view of detail C of Figure 6;
Figure 8 is a side view of an insert of a leg assembly for a subsoiler;
Figure 9 is a replication of Figure 7 showing dimensional detail thereon;
Figure 10 is a replication of Figure 8 showing dimensional detail thereon; and
Figure 11 is a side view of an adjustable leg portion of the leg assembly of Figure 4 showing dimensional detail thereon.

### Detailed Description of the drawings

The present teaching will now be described with reference to an exemplary subsoiler and leg assembly. It will be understood that the exemplary subsoiler and leg assembly are provided to assist in an understanding of the present teaching and are not to be construed as limiting in any fashion. Furthermore, elements or components that are described with reference to any one Figure may be interchanged with those of other Figures or other equivalent elements without departing from the spirit of the present teaching.

Referring now to the Figures there is illustrated a leg assembly 10 for a subsoiler. The leg assembly comprises a leg 11 and a ground tilling portion 12. The leg 11 is adjustably mounted to a mounting section 13 of the subsoiler via an adjustment arrangement 14. The leg 11 is adjustable relative to the mounting section 13 of the subsoiler such that the angle of attack of the ground tilling portion 12 relative to the ground is adjustable. Advantageously, the angle of the ground tilling portion 12 may be adjusted to a plurality of angles suited to a plurality of ground conditions such that, for example, when the ground is firmer, the ground tilling portion 12 may be adjusted to till the ground at a more optimal angle which results in less wear on the leg assembly 10, ground tilling portion 12, and overall subsoiler vehicle, and more efficient tilling. Further advantageously, where a worn or partially worn tilling portion 12 is utilised, the ground tilling portion 12 may be adjusted to till the ground at an optimal angle which maximises the efficiency of the worn or partially worn tilling portion 12. Yet further advantageously, the angle of attack may be selectably reduced to reduce heave and surface break-up when tilling, or alternatively selectably increased to provide better penetration and permit worn tilling portions to keep working beyond their useful lifespan as would be experienced on a non-adjustable leg. The adjustment herein is also achieved utilising a simple mechanical arrangement that may be installed on new subsoiler devices, or retro-fitted to existing devices with minimal adaptation of the existing structure and at a reasonable cost compared to a more complex adjustment system. The leg assembly 10 herein permits adjustment of the leg to an angle which optimises the balance between penetration and lift (or heave of the ground). Lift/heave being the vertical disturbance of the ground when tilling. Should too much lift/heave be present the angle of attack may be reduced to provide a more level tilling finish. Should penetration be an issue, in general and/or due to a worn tilling portion 12, the angle of attack may be increased to allow the tilling portion 12 to better penetrate the ground. In this way a user has the ability to find the correct balance for their particular circumstances and adjust the leg to the same.

The adjustment arrangement comprises a receiving feature 15 formed in the leg 11 and a corresponding insert 16 formed for insertion into the receiving feature 15. In the embodiment of the drawings the receiving feature is a throughout 15 in the leg 11, and this is the embodiment that will be discussed hereinafter. However, it should be understood that the receiving feature 15 may equally be a recess, as would be appreciated by the skilled person, a complete throughout is not necessarily required. The throughout 15 is therefore an aperture 15 shaped and dimensioned to receive the insert 16. In a preferred embodiment, as is shown in the drawings, the aperture 15 and insert 16 are correspondingly shaped generally circular features 15, 16 and sized such that the generally circular insert 16 is receivable within the generally circular aperture 15. However, the skilled person will appreciate that, whilst a circular aperture 15 and insert 16 may the simplest implementation, that the shape of the insert 16 and aperture 15 need not necessarily be circular and as such the scope of protection defined herein should be considered to encompass such non-circular embodiments, for example a pentagonal, hexagonal, octoganal etc inserts may be utilised, as could non-symmetrically shaped inserts.

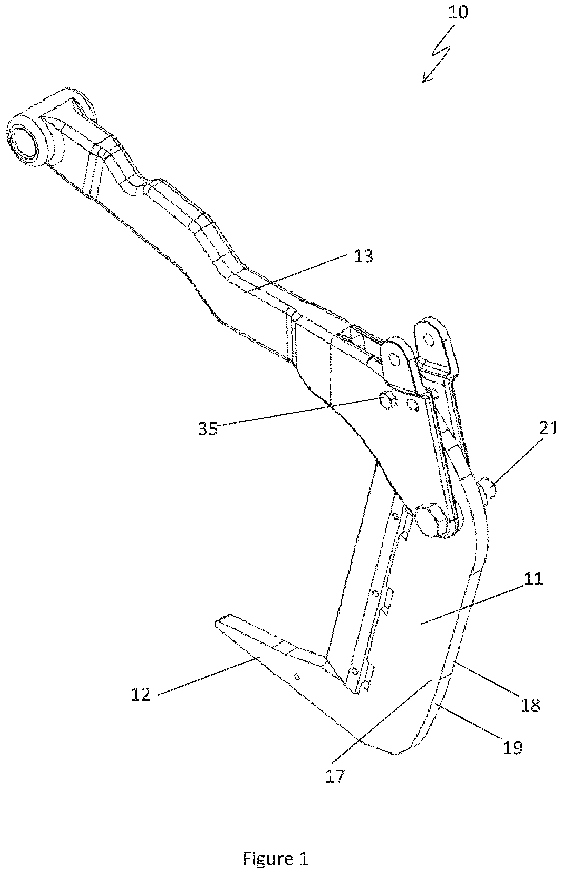

As can be seen in Figure 1, the leg 11 is formed from a plate material having first and second opposing surfaces 17, 18 separated by a plate thickness 19, the opposing surfaces each comprising an outline shape defining the shape of the leg 11. The plate like material is plate steel in a preferred embodiment, but this should not be considered limiting and any materials which would be considered by the skilled person in this field may be utilised and should be considered within the scope of this disclosure.

The aperture 15 is formed in the plate steel of the leg within the bounds of the outline shape and extends from the first opposing surface 17 to the second opposing surface 18 forming a complete throughout aperture 15. The insert 16, like the leg 11 is formed from a plate like material having first and second opposing surfaces separated by an insert plate thickness. Again, the insert is preferably formed from plate steel. The insert plate thickness is substantially equal to the plate thickness of the leg 11 and the insert is shaped correspondingly to the aperture 15 of the leg such that the insert is receivable into the aperture. Thus, given the insert 16 and leg 11 are of substantially equal thickness, when the insert 16 is inserted into the aperture 15, the first and second opposing surfaces of the insert 16 are generally coplanar with the first and second opposing surfaces 17, 18 of the leg. The thickness of the sheet material from which the leg and insert are formed is between 15mm and 40mm, and most preferably the thickness being 25mm.

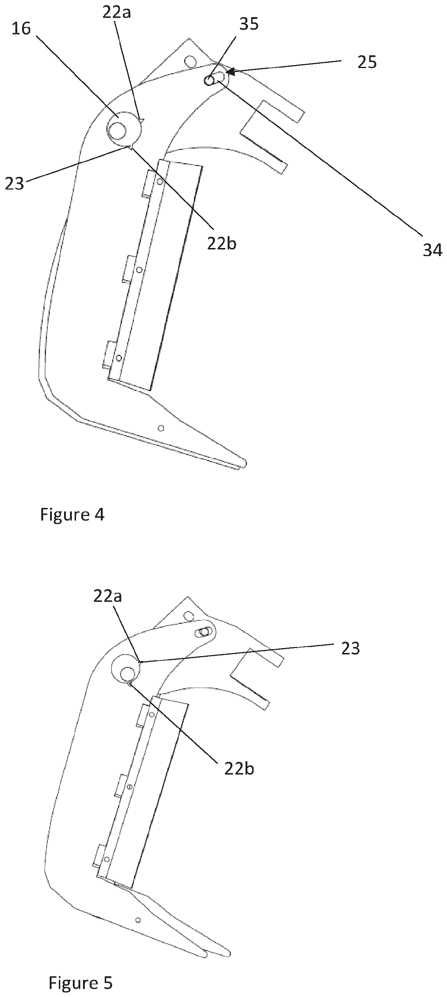

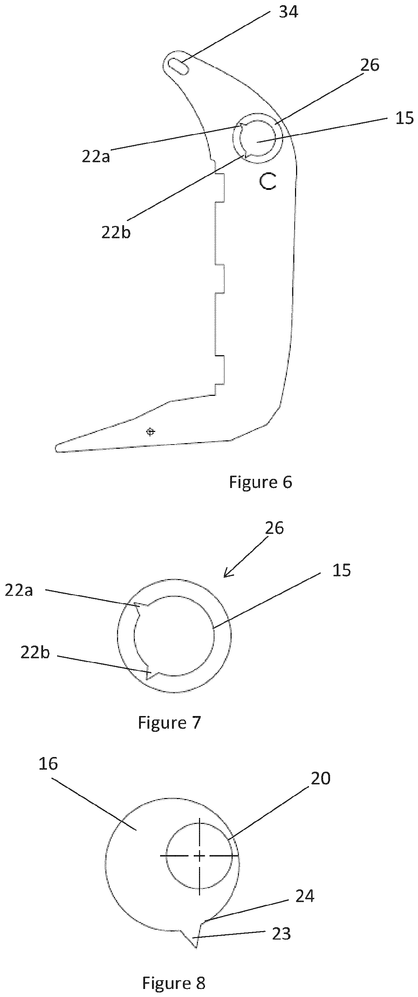

The insert comprises an insert throughbore 20 formed for receiving a first mechanical fastener 21. In the embodiment of the drawings the first mechanical fastener 21 is a bolt 21 and corresponding nut 21a. In the most preferred case the mechanical fastener 21 is a 30mm bolt 21 and corresponding nut 21a. The mounting section 13 comprises a first attachment throughbore (not shown) which is alignable with the insert throughbore 20 of the insert 16 in order that the first mechanical fastener 21 is engagable through the aligned first attachment throughbore and the insert throughbore 20 to releasably mount the insert 16 to the mounting section 13. As is best seen in Figure 8, the insert throughbore 20 is an offset throughbore which is offset centrally relative to the centre of the circular overall insert shape. In the embodiment of the drawings, the center of the insert throughbore is horizontally offset from the center of the insert by approximately 12.5mm and vertically offset from the center of the insert by approximately 4mm. Advantageously, should the insert 16 be rotated about the aligned first attachement throughbore and offset inset throughbores 20 to differing angular positions within the aperture 15, the offset nature of the inset throughbore 20 causes the leg 11 to move relative to the mounting section 12 in a manner which changes the attack angle of the tilling portion 12. This is best seen in Figures 4 and 5 which show the insert 16 being mounted in a first angular position within the aperture 15 (see figure 4), and the insert being rotated anti-clockwise and mounted in a second in a second angular position (see figure 5). As can be seen from figures 4 and 5, by virtue of the offset nature of the insert throughbore 20, the tilling section 12 is forced to become further swept backwardly as the insert is rotated anti-clockwise, forward being defined as the direction the pointed section of the tilling section is pointing, and backward being the opposing direction. Differing angles of attack are therefore attained by pivotal movement of the leg 11 rearward or forward, thus the angle of attack as shown in Figure 5 is achieved by pivoting the leg as shown in Figure 4 rearward.

The aperture 15 and the insert 16 comprise a mutually engagable locking arrangement 22a, 22b, 23 therebetween which is configured to selectably lock the insert 16 at two or more pre-defined positions relative to the aperture 15 in which it is received.The locking arrangement 22a, 22b, 23 comprises a locking protrusion 23 locatable on one of the insert 16 or the aperture 15 and a plurality of locking recesses 22a, 22b sized and dimensioned for receiving the locking protrusion 23 formed on the respective other of the insert 16 or the receiving portion 15. In a preferable embodiment, as shown in the drawings, the locking protrusion 23 is formed on the insert 16 and protrudes outwardly from an outer edge 24 thereof and the plurality of locking recesses 22a, 22b are formed on an edge 25 of the aperture and form outwardly protruding recesses formed in the material of the leg 11 which surrounds the aperture 15. As is best seen in Figure 7, the aperture comprises two locking recesses 22a, 22b, which provides for two locking positions between the aperture 15 and insert 16, a first locking position when the locking protrusion 23 is located in a first locking recess 22a, and a second locking position when the locking protrusion 23 is located in the second locking recess 22b. However, it should be appreciated that any number of locking recesses may be provided which would lead to a corresponding number of locking positions and thus the specific depiction of two locking recesses 22a, 22b in the drawings should not be construed as limiting. As is noted above, the offset nature of the insert throughbore causes the leg 11 to move relative to the mounting section 12 in a manner which changes the attack angle of the tilling portion 12 as the insert 16 is rotated to different angular positions within the aperture 15. As such, placement of the locking protrusion 23 and corresponding locking recesses 22a, 22b, provides for predefined angular positions whereat the insert 16 may be rotationally locked relative to the leg 11 and consequently pre-defined angles of attack for the tilling section 12. This can again be best seen in Figures 4 and 5. Figure 4 shows the insert 16 locked in a first angular position wherein the locking protrusion 23 is received in the first locking recess 22a. Figure 5 shows the insert 16 being rotated anti-clockwise about the aligned first attachment throughbore in the mounting section and offset insert throughbore 20, to an angular position wherein the locking protrusion is received in the second locking recess 22b. In such a position the leg pivots rearward about a second mounting point 25 locatable in the upper portion of the leg 11 whereat the leg is mounted to the mounting section 13. Thus, as the assembly is transitioned between the position as shown in Figure 4 and that as shown in Figure 5, the tilling section 12 of the leg 11 is forced to adopt a steeper angle of attack relative to the ground.

The locking protrusion 23 is a wedge shaped protrusion 23 and the locking recesses 22a, 22b are correspondingly shaped wedge shaped recesses 22a, 22b which are each sized to receive the wedge shaped locking protrusion 23. It should be noted that description of wedge shaped protrusions and recesses herein should not be construed as limiting, the protrusion and recesses may take any reasonable shapes which permit receiving of the protrusion into said recesses, and the skilled person would be well capable of adapting the protrusion and recesses to such suitable shapes. As is noted above, when the first mechanical fastener 21 is loosened or removed, the insert 16 is rotatable relative to the aperture 15 such that the insert 16 is selectably insertable into the aperture 15 such that its locking protrusion 23 may be selectably engaged in any chosen locking recess 22a, 22b, of the receiving feature. A plurality of possible locked positions are selectable whereat the insert 16 and the leg 11 are positionally locked relative to each other in an angular sense, the particular locked position being dependent on which locking recess 22a, 22b the locking protrusion is selectably engaged in. The insert 16 and leg 11 are fixed in a chosen locked position by tightening of the first mechanical fastener 21 which secures the insert to the mounting section 13 in a position wherein the locking protrusion 23 is located in a chosen locking recess 22a, 22b.

It is important to note that the insert 16 may also be reversed/flipped and inserted into the aperture 15 in the reversed/flipped orientation. In doing this, two further tilling positions may be achieved as the locking protrusion 23 and corresponding locking recesses 22a, 22b act to lock the leg 11 in two positions that differ from the positions resulting from insertion of the insert in the aperture 15 in the non-reversed/flipped orientation. In this way a single insert 16 may provide greater flexibility and adjustability in regard to tilling portion angle.

As noted above, in the embodiment of the drawings, the aperture 15 is a generally circular aperture having the locking recesses 22a, 22b formed at a circumference thereof. As can be seen in Figure 6, the locking recesses 22a, 22b form recesses which extend beyond the circumference of the generally circular receiving feature into surrounding material of the leg 11. The aperture 15 and locking recesses 22a, 22b may be formed directly in the material of the leg, or a circular aperture collar 26 may be formed which comprises the aperture 15 and locking recesses 22a, 22b formed therein and which is welded or otherwise secured into a collar receiving throughbore formed in the leg. The insert 16 is a generally circular insert 16 sized such that it may be received in the generally circular aperture 15. As can be seen in Figure 8, the locking protrusion 23 is located at a circumference of the insert 16 and extends beyond said circumference to form a projection 23 therefrom outside of the main generally circular body of the insert 16. The insert 16 is rotatably alignable relative to the aperture 15 prior to insertion such that the locking protrusion 23 is selectably alignable with a chosen locking recess 22a, 22b, upon which the insert 16 is inserted into the aperture 15, engaging the locking protrusion 23 in said chosen locking recess 22a, 22b.

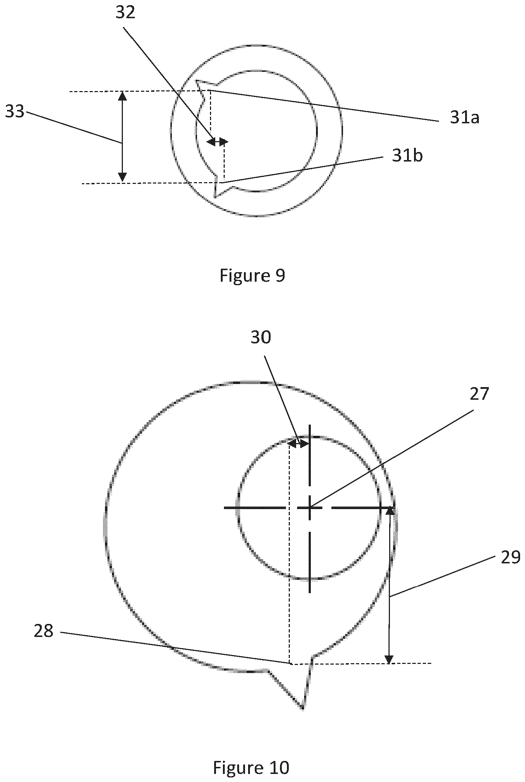

When the insert 16 is viewed in two dimensional plan view, the center 27 of the insert throughbore 20 is located approximately 4mm in a first dimension 30 from the center of the opening 28 of the locking protrusion 23 on the outer edge of the insert and approximately 33.5mm in a second dimension 29 from the center of the opening of the locking protrusion 23 on the outer edge of the insert. When the insert is orientated as shown in Figure 10, the first dimension extends horizontally and the second dimension extends vertically. In the embodiment of the drawings, the aperture 15 comprises two locking recesses 22a, 22b, and when the leg 11 is viewed in two dimensional plan view, the center of the openings 31a, 31b of the said two locking recesses 22a, 22b are locatable approximately 7.2mm in a first dimension 32 from each other and approximately 45.6mm in a second dimension 33 from each other. When the insert is orientated as shown in Figure 9, the first dimension extends horizontally and the second dimension extends vertically. Where viewing in a two dimensional plan view is discussed herein, it is meant that a component or components are laid flat and viewed looking directly onto their side face, for example as is shown in Figures 4 to 8.

The leg and mounting section are releasably mountable to each other at the second mounting point 25 by a second mounting arrangement 25. The second mounting arrangement 25 comprises a second attachment throughbore formed in the mounting section (not shown) and a corresponding leg throughbore 34 formed in the leg 11. The leg throughbore 34 is alignable with the second attachment throughbore and a second mechanical fastener 35 is engagable through said aligned throughbores to releasably mount the leg 11 to the mounting section 13. The leg throughbore 34 is an elongated throughbore 34. Advantageously, the elongated throughbore 34 permits longitudinal movement of the second mechanical fastener 35 when said second mechanical fastener is loosened, such that as the leg is adjusted via the adjustment arrangement 14, the second mechanical fastener 35 may travel as required. The second mechanical fastener is a second bolt 35 and corresponding nut 35a arrangement and in the embodiment of the drawings, is a 16mm bolt 35a and corresponding nut arrangement 35b.

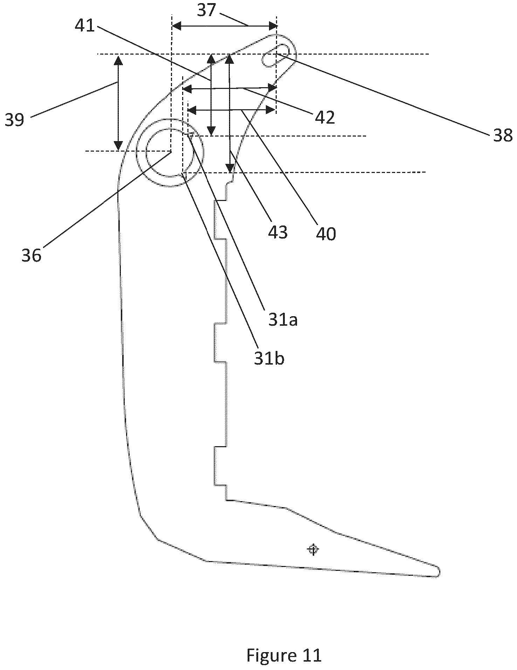

As is best viewed in Figure 11, when the leg 11 is viewed in a two dimensional plan view, the center 36 of the aperture 15 is located approximately 139 mm in a first dimension 37 from the center 38 of the leg throughbore 35 and approximately 126mm in a second dimension 39 from center 38 of the leg throughbore 35. When the insert is orientated as shown in Figure 11, the first dimension extends horizontally and the second dimension extends vertically. As is also best viewed in in Figure 11, when the leg is viewed in a two dimensional plan view, the center 31a of the opening of a first locking recess 22a into the material surrounding the aperture 15 is located approximately 115.4mm in a first dimension 40 from the center 38 of the leg throughbore 35, and located approximately 106.5mm in a second dimension 41 from the center 38 of the leg throughbore 35. The center of the opening of a second locking recess 31b into the material surrounding the aperture 15 is located approximately 122.6mm in a first dimension 42 from the center 38 of the leg throughbore 35, and located approximately 152.2mm in a second dimension 43 from the center 38 of the leg throughbore 35. In the embodiment of the drawings, the center of the insert throughbore is horizontally offset from the center of the insert by approximately 12.5mm and vertically offset from the center of the insert by approximately 4mm.

Dimensions and dimension ranges provided herein are for the purposes of illustrating to the skilled person at least one specific manner in which the invention may be implemented and in no way should be construed as limiting. The dimensions herein may be varied depending on the scale of the overall assembly, or the level of desired adjustment in the leg. The skilled person would be capable of making such adjustments without inventive input and thus embodiments which result from mere changing of dimensions or repositioning of features relative to one another as discussed herein should be considered to fall within the scope of the invention as claimed. For example, in countries with more arid/hard ground conditions, the placement of the mutually engagable locking arrangement components, and/or the sizing of the insert and receiving feature, and/or the spacing between the receiving feature and the leg throughbore, may be varied to result in the provision of desired locked tilling angles.

In use, the first bolt 21 is removed such that the insert 16 is released from the mounting section 13. The second bolt 35 may be then be removed, or alternatively just loosened. The insert 16 may then be rotated to a selected angular position wherein the locking projection 23 thereof is aligned with and received into a selected locking recess 22a, 22b. The first and second bolts 21, 35, are then reinserted and associated nuts 21a, 35a tightened to lock the assembly in the selected position.

The invention is not limited to the embodiment(s) described herein but can be amended or modified without departing from the scope of the present invention.

## Claims

1. A leg assembly for a subsoiler comprising:
a leg comprising a ground tilling portion;
the leg being adjustably mountable to a mounting section of the subsoiler via an adjustment arrangement;
wherein the leg is adjustable relative to the mounting section of the subsoiler such that the angle of attack of the ground tilling portion relative to the ground is adjustable.

2. The leg assembly of claim 1, wherein the adjustment arrangement comprises a receiving feature formed in the leg and a corresponding insert formed for insertion into the receiving feature.

3. The leg assembly of claim 2, wherein the receiving feature comprises a recess or throughout formed in the leg, said recess or throughout being shaped and dimensioned to receive the insert, preferably the receiving feature and insert being correspondingly shaped generally circular features sized such that the generally circular insert is receivable within the generally circular receiving feature.

4. The leg assembly of claim 2 or claim 3, wherein the leg is formed from a plate material having first and second opposing surfaces separated by a plate thickness, the opposing surfaces each comprising an outline shape defining the shape of the leg, the receiving feature being a throughout formed in the plate like material within the bounds of the outline shape and which extends from the first opposing surface to the second opposing surface forming a complete throughcut; and/or wherein the insert is formed from a plate like material having first and second opposing surfaces separated by an insert plate thickness, the insert plate thickness being substantially equal to the plate thickness of the leg and the insert being shaped correspondingly to the throughout such that the insert is receivable into the throughcut, with the first and second opposing surfaces of the insert being generally coplanar with the first and second opposing surfaces of the leg when the insert is inserted in said throughcut; and/or wherein the insert comprises an insert throughbore formed therein for receiving a mechanical fastener.

5. The leg assembly of claim 4, wherein the mounting section comprises a first attachment throughbore which is alignable with the insert throughbore of the insert, a first mechanical fastener being engagable through the aligned first attachment throughbore and the insert throughbore to releasably mount the insert to the mounting section; and/or wherein the insert throughbore is an offset throughbore which is offset centrally relative to the overall insert shape.

6. The leg assembly of any of claims 2 to 5 wherein the receiving feature and the insert comprise a mutually engagable locking arrangement therebetween.

7. The leg assembly of claim 9, wherein the mutually engagable locking arrangement is configured to selectably lock the insert at two or more pre-defined positions relative to the receiving feature; and/or wherein the mutually engagable locking arrangement comprises a locking protrusion locatable on one of the insert or the receiving portion and a plurality of locking recesses sized and dimensioned for receiving the locking protrusion formed on the respective other of the insert or the receiving portion; and/or wherein the locking protrusion is formed on the insert and protrudes outwardly from an outer edge thereof, and the plurality of locking recesses are formed on the receiving feature and form inwardly protruding recesses formed in the material of the leg which surrounds the receiving feature.

8. The leg assembly of claim 7, wherein the insert is movable relative to the receiving feature such that the insert is selectably insertable into said receiving feature such that its locking protrusion may be selectably engaged in any chosen locking recess of the receiving feature to result in a plurality of possible locked positions whereat the insert and the leg are positionally locked relative to each other, the particular locked position being dependent on which locking recess the locking protrusion is selectably engaged in, and optionally the insert and leg being fixable in a chosen locked position by tightening of the first mechanical fastener.

9. The leg assembly of any of claim 7 or claim 8, wherein the receiving feature is a generally circular receiving feature having the locking recesses formed at a circumference thereof, the locking recesses forming recesses which extend beyond the circumference of the generally circular receiving feature into surrounding material of the leg; and/or wherein the insert is a generally circular insert sized such that it may be received in the generally circular receiving feature, the locking protrusion being located at a circumference of the insert extending beyond said circumference to form a projection therefrom outside of the main generally circular body of the insert; and/or wherein the insert is rotatably alignable relative to the receiving feature prior to insertion such that the locking protrusion is selectably alignable with a chosen locking recess, upon which the insert is inserted into the receiving feature, engaging the locking protrusion in said chosen locking recess.

10. The leg assembly of any of claims 7 to claim 9, wherein, when the insert is viewed in two dimensional plan view, the center of the insert throughbore is located approximately 4mm in a first dimension from the center of the opening of the locking protrusion on the outer edge of the insert and approximately 33.5mm in a second dimension from the center of the opening of the locking protrusion on the outer edge of the insert.

11. The leg assembly of any of claims 7 to 10, wherein the receiving feature comprises two locking recesses, and preferably wherein, when the leg is viewed in two dimensional plan view, the center of the openings of the said two locking recesses being locatable approximately 7.2mm in a first dimension from each other and approximately 45.6mm in a second dimension from each other.

12. The leg assembly of any preceding claim, wherein the leg and mounting section are releasably mountable to each other at a second mounting arrangement, and optionally wherein the second mounting arrangement comprises a second attachment throughbore formed in the mounting section and a corresponding leg throughbore formed in the leg, the leg throughbore being alignable with the second attachment throughbore and a second mechanical fastener being engagable through said aligned throughbores to releasably mount the leg to the mounting section, and optionally, wherein the leg throughbore and/or second attachment throughbore is an elongated throughbore, most preferably the leg throughbore being an elongated throughbore.

13. The leg assembly of claim 12, wherein, when the leg is viewed in a two dimensional plan view, the center of the receiving feature is located approximately 139mm in a first dimension from the center of the leg throughbore and approximately 126mm in a second dimension from center of the leg throughbore; and/or wherein, when the leg is viewed in a two dimensional plan view, the center of the opening of a first locking recess into the material surrounding the receiving feature is located approximately 115.4mm in a first dimension from the center of the leg throughbore, and located approximately 106.5mm in a second dimension from the center of the leg throughbore.

14. A subsoiler comprising a leg assembly, the leg assembly comprising:
a leg comprising a ground tilling portion;
the leg being adjustably mountable to a mounting section of the subsoiler via an adjustment arrangement;
wherein the leg is adjustable relative to the mounting section of the subsoiler such that the angle of attack of the ground tilling portion relative to the ground is adjustable.

15. A method of manufacturing a leg assembly for a subsoiler comprising the steps of:
forming a leg comprising a ground tilling portion;
forming an adjustment arrangement;
adjustably mounting the leg to a mounting section of the subsoiler via the adjustment arrangement;
wherein the leg is adjustable relative to the mounting section of the subsoiler such that the angle of attack of the ground tilling portion relative to the ground is adjustable.
